# EUROPEAN PATENT SPECIFICATION

(11) **EP 2 130 205 B1**
(45) Date of publication and mention of the grant of the patent: **08.06.2011**
(21) Application number: 08719719.0
(22) Date of filing: 17.03.2008
(51) Int. Cl.: G11B 7/24, G11B 23/36, G11B 23/40, G11B 27/32

(54) **OPTICAL DISK AND STORAGE BOX FOR OPTICAL DISCS**
OPTISCHE PLATTE UND AUFBEWAHRUNGSBEHÄLTER FÜR OPTISCHE PLATTEN
DISQUE OPTIQUE ET BOÎTIER DE STOCKAGE POUR DISQUE OPTIQUE

(30) Priority: 22.03.2007 EP 07104673
(43) Date of publication of application: 09.12.2009
(73) Proprietor: Koninklijke Philips Electronics N.V., 5621 BA Eindhoven (NL)
(72) Inventor: PASQUARIELLO, Donato, NL-5656 AE Eindhoven (NL); VAN DEN OETELAAR, Ronald, J., A., NL-5656 AE Eindhoven (NL)
(74) Representative: Uittenbogaard, Frank
(86) International application number: PCT/IB2008/050984
(87) International publication number: WO 2008/114193

(56) References cited:
- EP-A- 1 160 781
- EP-A- 1 416 294
- WO-A-00/43945
- WO-A-99/41738
- WO-A-2006/053330
- WO-A-2006/108157
- US-A1- 2003 072 908
- US-A1- 2003 161 224
- US-A1- 2004 054 594

## Description

### FIELD OF THE INVENTION

The present invention relates in general to the field of optical discs and their storage boxes, particularly but not exclusively DVD.

### BACKGROUND OF THE INVENTION

As is commonly known, an optical storage disc comprises at least one track, either in the form of a continuous spiral or in the form of multiple concentric circles, of storage space where information may be stored in the form of a data pattern. Reading information from the disc is typically done by rotating the optical disc and scanning the tracks with an optical beam, typically a laser beam. Since the technology of optical discs in general, the way in which information can be stored in an optical disc, and the way in which optical data can be read from an optical disc, is commonly known to persons skilled in the art, it is not necessary here to describe this technology in more detail. This applies to the physical build-up of the disc as well as to the format used for storing the information.

The invention will be particularly useful in the field of DVD (Digital Versatile Disc), and the invention will hereinafter be explained for the example of DVD, but it is noted that the gist of the invention can also be applied to different types of discs, for instance CD.

Optical discs may be writeable, so that a user can store information. However, optical discs may also be read-only, where a user can only read information but can not amend the information written on the disc. This type of disc is typically used for selling games or computer programs (ROM-type), video movies (DVD; BD), or music (CD). As compared to other types of information carriers, such as for instance magnetic tape, the optical disc has an advantage of substantially increased storage capacity and increased readout versatility, making it possible to provide longer playtime (longer movies) with increased resolution (HD quality) and extended user options (multi-angle, choice of subtitles). An optical disc also has improved lifetime.

In the movie industry, movies are commercially exploited in, basically, four ways. A first way is distribution in theatres. An individual wishing to see the movie buys a ticket and visits the show; in such case, the user "buys" the right to watch the movie once, one person only, at a predetermined time and place.

A second way is distribution via television. An individual wishing to see the movie tunes his television set to the required channel. The television broadcast is at a predetermined time; if the user wishes to watch at a different time, he can record the broadcast and playback later (or he can watch but record anyway for possible later playback) as many times as he likes. For "normal" television broadcast, there is no specific payment required.

A third way is distribution on DVD. An individual wishing to see the movie buys a DVD and plays it in his disc drive. The quality is usually higher than the quality of normal television broadcast, and the DVD contains usually additional functions and/or information. However, the price may typically be in the same order as the price for a theatre ticket, which is relatively expensive. Yet, for the user, he obtains an advantage with respect to going to the theatre, i.e. he can watch the movie when he likes, as many times as he likes, with as many guests as he likes. It goes without saying that this advantage to the user is associated with a disadvantage to the movie manufacturer: he receives payment only once.

A fourth way is again distribution on DVD, but now a DVD with "limited play". The advantages are the same as with "normal" DVD, with the exception that the user can watch the movie only during a limited time frame of, for instance, 48 hours. After that, the DVD can no longer be used. DVDs of such type are distributed at relatively low price (substantially lower than "normal" DVD), through "cheap" retail channels such as, for instance, supermarkets, gas stations, etc.

Optical discs of this type will be indicated as "limited viewing discs". Limited viewing discs are known per se, so a detailed explanation of their physical design is omitted here. Suffice it to say that such discs may comprise a reactive dye that, under the influence of for example oxygen or ultra violet light, changes from a transparent state to a state absorbing the wavelength of the laser light used in a disc player; by way of example, reference is made to WO99/41738. Such disc may also comprise an electro-chromic layer activated by an RFID tag integrated in the disc material; by way of example, reference is made to WO2004/025645.

Patent application WO2006/053330 discloses an optical disk in which a first part of the information storage layer is always visible to the disk player, and a second part which is rendered non visible to the disk player by the presence of a read inhibit agent forming a layer overlying said second part of the storage layer and having the properties of changing from transparent to opaque when subjected to an external stimulus.

### SUMMARY OF THE INVENTION

Apart from the payload content (i.e. the actual movie), a DVD may contain content relating to promotion actions and activities. This type of content will briefly be indicated as "advertisement". Two examples will be mentioned here.

A first example relates to a trailer, i.e. a preview of future releases. Such future release may involve a DVD, in order to promote the sale of such DVD. Such future release may also involve movies soon to be expected in theatres, in order to promote the sale of theatre tickets.

A second example relates to a contest. The owner of the DVD may be offered the possibility of entering a contest where he may win, for instance, a trip to Hollywood. The contest is only open until a certain date.

In both cases, the advertisement is useful up to a certain date only. Not only would it be annoying to the user that he can not profit from the event (such as a contest) mentioned in the advertisement because the event is already over, but such outdated advertisement further gives the impression of an outdated or "old" DVD. It may even happen that retailers have to return unsold discs to the manufacturer.

Further, a disc has a label at the surface opposite the optical surface, and the disc is sold in a box provided with a cover. The label and/or the cover also may contain promotional information. If a promotion on the label and/or the cover is outdated (whether corresponding to an advertisement on the disc or not), similar disadvantages exist.

It is a general objective of the present invention to eliminate or at least reduce the above problems.

While "limited viewing discs" are completely useless after some time, the present invention proposes that the same technique be used to change the content with time. Discs of this type will be indicated as "changing content discs".

Particularly, the present invention proposes that the "outdated" advertisement is no longer visible to the user. It is possible that the advertisement content is simply made invisible, but it is also possible that another advertisement content now becomes visible instead. By way of example, this effect can be achieved if a DVD is given an alternative Table Of Contents (TOC) at a different location than the location of the original TOC, and if the disc is provided with a layer of reactive dye overlying the original TOC location. In a first phase of use, the dye will be transparent and a disc player will find the original TOC and hence the content of the original advertisement to which the original TOC points. Thus, the original advertisement is "visible", or "available for being viewed on playback". When, in a later phase, the dye will be non-transparent so that the disc player can not read the original TOC on the originally expected location, the disc player will start searching for an alternative TOC and, once found, will play the content to which this alternative TOC points, which now will be a second advertisement differing from the original advertisement. Thus, the second advertisement is "visible" or "available for being viewed on playback" while the original advertisement is not.

The present invention further proposes that a disc label has changing content.

The present invention relates particularly to the field of changing content discs, but this aspect of the invention can also be practiced in combination with "normal" discs. In the case of a disc label on a changing content disc, it is preferred that the visible content of the label changes at substantially the same time as the playable content on the disc changes.

The present invention further proposes that a disc box cover has changing visible content.

The present invention relates particularly to the field of changing content discs, but this aspect of the invention can also be practiced in combination with "normal" discs. In the case of a disc box containing a changing content disc, it is preferred that the visible content of the box cover changes at substantially the same time as the playable content on the disc changes.

Further advantageous elaborations are mentioned in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Fig. 1 schematically shows a cross section of a part of an optical disc;
Fig. 2 schematically shows a cross section of a part of a storage box for accommodating an optical disc.

### DETAILED DESCRIPTION OF THE EMBODIMENTS

In the following, the invention will be explained for the case of a DVD. It should be clear to a person skilled in the art that some details may have to be adapted in the case of a disc of different format.

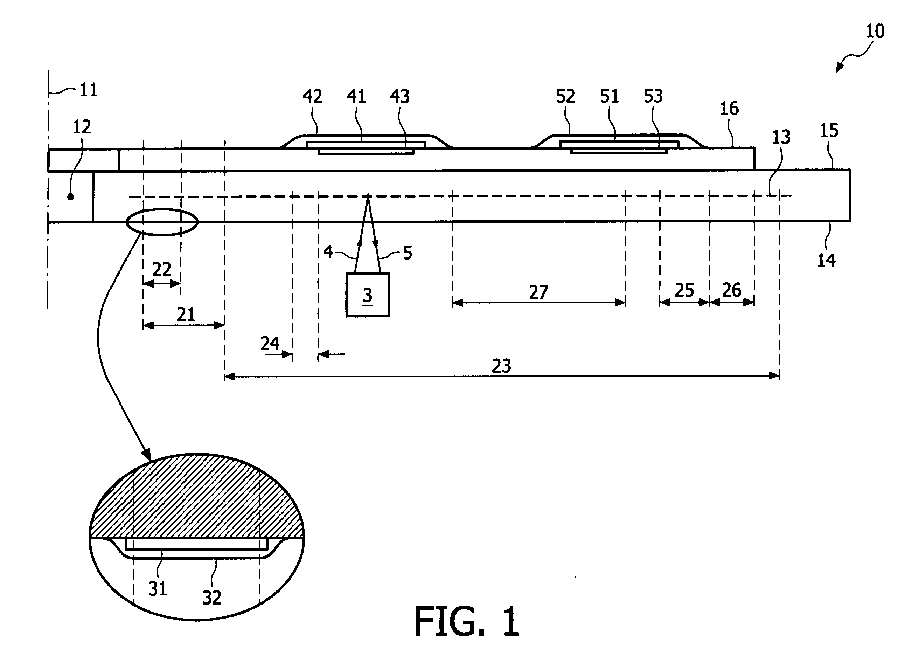

Figure 1 schematically shows a cross section of a part of an optical disc 10 having a rotational axis 11 and a central hole 12. The disc 10, which is made of an optically transparent material, as known, comprises at least one storage layer 13, containing a pattern that can be read by an optical pickup 3 that emits a laser beam 4 and receives the reflected laser light 5. The laser beam 4 hits the disc 10 at one main surface 14, which will be indicated as the optical surface. Optical discs may comprise two or more storage layers readable from the same side. It is also possible that an optical disc comprises two storage layers readable from opposite sides; in such case both disc surfaces are optical surfaces. In the present example, the disc 10 has only one optical surface 14, and its opposite surface 15 is provided with a label 16. The label 16 may be implemented in the form of a sticker or the like, i.e. an additional entity attached to the disc proper in any suitable manner; this is the embodiment illustrated. It is also possible that the label 16 is implemented in the form of a pigment layer integrated in the disc material.

The information written in the storage layer 13 is organized in a predefined way, as should be clear to a person skilled in the art. At a predefined location, the disc has a lead-in zone 21, which is shown close to the centre of the disc. At a predefined location in the lead-in zone 21, the disc has a table of contents (TOC). The TOC starts at a predefined address, thus the physical location of the TOC corresponds to a certain disc area 22 that will be indicated as TOC area. The TOC contains information on the content (such as for instance subtitles, trailer, main movie, extra features) stored on the disc in a zone outside the lead-in zone 21, which will be indicated as the content zone 23. Particularly, the TOC contains the addresses where the different portions of the content are stored (also indicated as pointers towards the content).

In operation, a disc drive reads the TOC and presents to the user a list of viewable content options. After the user has entered his choice, the disc drive consults the TOC to retrieve the corresponding starting address, and the optical pickup 3 makes a jump to that location.

Normally, a disc needs to have only one TOC. However, it is possible that a disc contains one or more secondary TOCs, to be used as replacement for the main TOC if the main TOC can not be read because of any reason, for instance physical damage to the optical surface. Depending on the disc format, it is possible that the locations of such secondary TOCs are predefined, it is possible that the lead-in-zone 21 contains a pointer to a secondary TOC, but it is also possible that a disc drive, when it can not read a TOC at the expected standard location, starts (all by itself) looking for an alternative TOC elsewhere. In the disc 10 according to the present invention, the disc contains a secondary TOC in an area that will be indicated as secondary TOC area 24. Further, the disc contains a first advertisement in an area that will be indicated as first advertisement area 25, and a second advertisement in an area that will be indicated as second advertisement area 26. The original TOC contains a pointer to the starting address of the first advertisement in first advertisement area 25; the secondary TOC contains a pointer to the starting address of the second advertisement in second advertisement area 26.

It is noted that the disc may contain more secondary TOCs, and more advertisements.

According to the present invention, the disc 10 comprises a reactive layer 31 overlying the storage layer 13 in the TOC area 22. The reactive layer 31 may extend over the entire lead-in zone 21. Alternatively, or additionally, it is also possible that a reactive layer overlies the storage layer 13 in the first advertisement area 25. In all of these cases, the reactive layer is capable of inhibiting playback of the first advertisement, as will be explained. Therefore, the reactive layer 31 will more generally be indicated as advertisement inhibit layer. If the advertisement inhibit layer simply coincides with the first advertisement area 25, it may be that playback of the first advertisement will simply be inhibited without any replacement advertisement being playable; therefore, the embodiment where the advertisement inhibit layer overlies the TOC is preferred.

The reactive layer 31 initially is transparent, at least to the laser light 4 used by the optical pickup 3 for playing the disc 10. However, the reactive layer 31 contains a material that is capable of changing the optical properties of the layer 31 so that it turns opaque. This material may be a suitable dye, changing from a transparent state to an opaque state under the influence of, for instance, oxygen (or another component of ambient air) or ultra violet light (or another component of ambient light). This material may also be an electrochromic material, changing from a transparent state to an opaque state under the control of an RFID chip (not shown) integrated in or attached to the disc. Suitable materials are known in the field of limited viewing discs and can be used for implementing the present invention. It is noted that the documents indicated above mention several suitable materials.

According to a further aspect of the present invention, the reactive layer 31 is provided with a timing control arrangement for timing the layer's transition. This can be implemented in several ways.

In an embodiment where the reactive layer 31 comprises a dye that is sensitive to oxygen, it is possible that the reactive layer 31 is covered by a barrier layer 32, as illustrated, capable of allowing oxygen to pass by diffusion. Examples for suitable barrier layers are silicon nitride (Si₃N₄) or polymers. The oxygen reaches the reactive layer 31 only after having diffused through the barrier layer 32, which takes time, depending on inter alia the thickness of the barrier layer 32. Thus, by properly selecting the thickness of the barrier layer 32, it is possible to set the transition time, i.e. the time it takes for the reactive layer 31 to make the transition to the opaque state after the disc has been taken out of a sealing envelope (not shown).

Also, in an embodiment where the reactive layer 31 comprises a dye that is sensitive to oxygen, it is possible that the reactive layer 31 further comprises a capture substance having a lower oxidation potential. This means that any oxygen will initially be captured by the capture substance, until all substance has captures oxygen, and only then the oxidation of the dye sets in.

By way of example, the dye may be methylene blue, which in its reduced state is transparent (leuco methylene blue). Oxidation turns leuco methylene blue into the coloured state of methylene blue. This reaction is reversible (redox reaction), so the coloured methylene blue may be discoloured by reducing the oxygen pressure. A suitable capture substance is for instance Sn(II) 2-ethyl hexanoate, which oxidates into Sn(IV) 2-ethyl hexanoate; this reaction is not an equilibrium reaction. Only after all Sn(II) 2-ethyl hexanoate has been oxidised to form Sn(IV) 2-ethyl hexanoate, the oxidation of leuco methylene blue starts. Thus, by properly selecting the amount of Sn(II) 2-ethyl hexanoate, i.e. the Sn(II) 2-ethyl hexanoate concentration, it is possible to set the transition time of the leuco methylene blue.

It should be clear that similar delayed oxidation reactions are possible for different dyes and using different capture substances.

In an embodiment where the reactive layer 31 comprises an electrochromic layer controlled by an RFID chip integrated in the disc (at a suitable location where it does not hinder the reading process, for instance at a radius in the range from 19.5 mm to 22.5 mm), the RFID chip may be actuated at a point of sale. This mechanism may be used to selectively hide part of the content of the disc, or to selectively disclose (enable) part of the content of the disc, which may depend on the date, but which may also depend on the options paid for by the buyer.

It is noted that in an alternative embodiment a reactive layer may turn from opaque to transparent after some time, to thus disclose content that was hidden until that moment. This may even be implemented in the reactive layer 31 overlying the TOC: as long as the reactive layer 31 is transparent, the second advertisement will be shown, and after the transition of the reactive layer 31 the first advertisement will be shown.

It is further possible that a content that becomes visible after a first delay becomes invisible again after a second delay. This may for instance be implemented by arranging two (or even more) reactive layers over each other.

It is noted that, in all cases mentioned above, the disc contains a main content (i.e. the actual movie) which is visible at all times. Thus, both during the first phase of use and during the later phase of use, any TOC will contain a pointer to this main content. Further, an area 27 of the content zone 23 containing the main content, therefore indicated as main content area 27, is free from any inhibit layer.

The label 16 contains information visible to the human eye (text, images) relating to the disc and its content. The label 16 may also contain visible information relating to an advertisement. For reasons similar to the ones explained above in respect of the disc content, the label 16 according to the present invention has the characterizing feature that the visible information of the label 16 changes after some time.

In figure 1, an advertisement image of the label 16 is indicated at 43. A portion of the label 16 is provided with a reactive layer 41, overlying the advertisement image 43, capable of making a transition from transparent to opaque. Further, this reactive layer 41 is provided with a timing control arrangement; a timing control layer 42 is shown, overlying the reactive layer 41. For the timing control arrangement, particularly the timing control layer 42, the same applies as what has been discussed in the above for the timing control layer 32, and the same materials can be used here. Also, for the reactive layer 41, the same applies as what has been discussed in the above for the reactive layer 31, and the same materials can be used here. Thus, without needing to repeat the above explanation, it should be clear to a person skilled in the art that the advertisement image 43 "disappears" after some time. However, it should be clear that in this context the wording "visible" means visible to the human eye, and "invisible" means invisible to the human eye, not to a laser beam.

The figure 1 further shows a second advertisement image of the label 16, indicated at 53. A portion of the label 16 is provided with a second reactive layer 51, overlying the second advertisement image 53, capable of making a transition from opaque to transparent. Further, this second reactive layer 51 is provided with a timing control arrangement; a second timing control layer 52 is shown, overlying the second reactive layer 51. For the second timing control arrangement, particularly the second timing control layer 52, the same applies as what has been discussed in the above for the timing control layer 32, and the same materials can be used here. Also, for the reactive layer 51, the same applies as what has been discussed in the above for the reactive layer 31, and the same materials can be used here. Thus, without needing to repeat the above explanation, it should be clear to a person skilled in the art that the second advertisement image 53 "appears" after some time.

Thus, an image 43 may disappear after some delay due to an overlying reactive layer 41 turning from transparent to opaque, and an image 53 may appear after some delay due to an overlying reactive layer 51 turning from opaque to transparent. In those cases, the reactive layer operates as a controllable cover hiding the underlying image from view. It is however also possible that the image itself is implemented as a reactive layer: the dye is then arranged in a pattern making up the image (or text). A layer turning from opaque to transparent, then, implements a disappearing image, and a layer turning from transparent to opaque implements an appearing image.

The above already applies to labels in the case a disc does not contain any advertisement. In case the disc does contain an advertisement that is disclosed or hidden with a delay, while the information of the label 16 relates to the same advertisement, it is preferred that the timing of the reactive layer(s) 41, 51 of the label 16 is substantially synchronised with the timing of the reactive layer(s) 31 of the disc content. In the case of electrochromic layers 31, 41 and 51, it is possible that all layers are controlled by a common RFID chip.

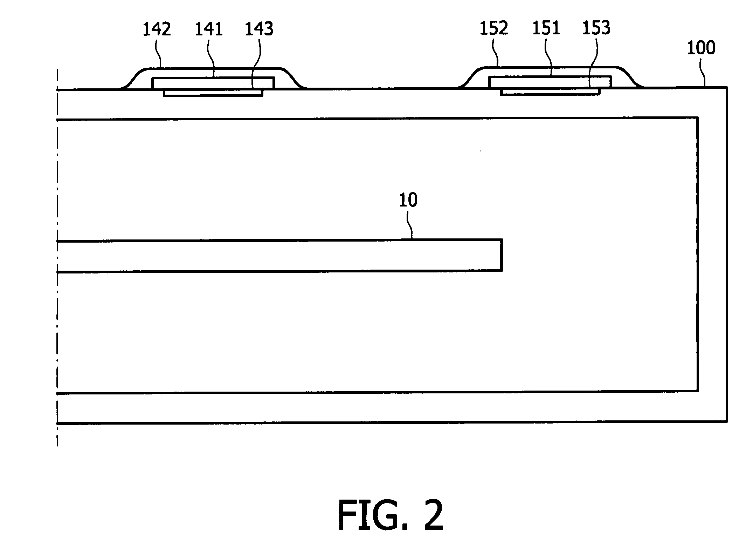

Figure 2 schematically shows a cross section of a part of a storage box 100 for accommodating a disc 10 (shown in dotted lines). The box 100 is shown to contain one disc, but it is also possible that the box contains multiple discs. Boxes of this type, which are used when retailing discs, are commonly known, and a detailed description is not needed. Suffice it to say that the box is typically made from a transparent material, typically plastic. It is noted that such box typically comprises a case and a hinging cover lid, but these details are omitted from the diagrammatic figure for sake of simplicity.

The box 100 contains information visible to the human eye (text, images) relating to the disc and its content. The box 100 may also contain visible information relating to an advertisement. For reasons similar to the ones explained above in respect of the disc content, the box 100 according to the present invention has the characterizing feature that the visible information of the box 100 changes after some time.

In figure 2, an advertisement image of the box 100 is indicated at 143. A portion of the box 100 is provided with a reactive layer 141, overlying the advertisement image 143, capable of making a transition from transparent to opaque. Further, this reactive layer 141 is provided with a timing control arrangement; a timing control layer 142 is shown, overlying the reactive layer 141. For the timing control arrangement, particularly the timing control layer 142, the same applies as what has been discussed in the above for the timing control layers 32 and 42, and the same materials can be used here. Also, for the reactive layer 141, the same applies as what has been discussed in the above for the reactive layers 31 and 41, and the same materials can be used here. Thus, without needing to repeat the above explanation, it should be clear to a person skilled in the art that the advertisement image 143 "disappears" after some time.

The figure 2 further shows a second advertisement image of the box 100, indicated at 153. A portion of the box 100 is provided with a second reactive layer 151, overlying the second advertisement image 153, capable of making a transition from opaque to transparent. Further, this second reactive layer 151 is provided with a timing control arrangement; a second timing control layer 152 is shown, overlying the second reactive layer 151. For the second timing control arrangement, particularly the second timing control layer 152, the same applies as what has been discussed in the above for the timing control layers 32 and 42, and the same materials can be used here. Also, for the reactive layer 151, the same applies as what has been discussed in the above for the reactive layers 31 and 41, and the same materials can be used here. Thus, without needing to repeat the above explanation, it should be clear to a person skilled in the art that the second advertisement image 153 "appears" after some time.

Thus, an image 143 may disappear after some delay due to an overlying reactive layer 141 turning from transparent to opaque, and an image 153 may appear after some delay due to an overlying reactive layer 151 turning from opaque to transparent. In those cases, the reactive layer operates as a controllable cover hiding the underlying image from view. It is however also possible that the image itself is implemented as a reactive layer: the dye is then arranged in a pattern making up the image (or text). A layer turning from opaque to transparent, then, implements a disappearing image, and a layer turning from transparent to opaque implements an appearing image.

In the above, the images 143, 153 and the layers 141, 142, 151, 152 are arranged in or on the box material. It is also possible that the box itself is transparent but contains an insert with the images 143, 153 and the layers 141, 142, 151, 152; such insert may for instance be made from paper.

The above already applies to boxes in the case a disc does not contain any advertisement. In case the disc does contain an advertisement that is disclosed or hidden with a delay, while the information of the box 100 relates to the same advertisement, it is preferred that the timing of the reactive layer(s) 141, 151 of the box 100 is substantially synchronised with the timing of the reactive layer(s) 31 of the disc content. In the case of electrochromic layers 141 and 151, it is possible that all layers are controlled by a common RFID chip. Likewise, in case the disc comprises a label having an advertisement that is disclosed or hidden with a delay, while the information of the box 100 relates to the same advertisement, it is preferred that the timing of the reactive layer(s) 141, 151 of the box 100 is substantially synchronised with the timing of the reactive layer(s) 41, 51 of the label.

It is noted that in this case the disc does not need to be an optical disc, and the boxes according to the invention can also be used for accommodating other types of information carriers.

Summarizing, the present invention provides an optical disc 10 comprising at least one storage layer 13 with at least one portion of content being a movie and at least one other portion of content being an advertisement. Initially, the advertisement is visible, but after some time the advertisement is no longer visible. The optical disc may be provided with a label 16 containing an advertisement image 43 which initially is visible but after some time is no longer visible. The optical disc may be accommodated in a storage box 100 provided with an advertisement image 143 which initially is visible but after some time is no longer visible.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Changing content optical disc (10), comprising at least one storage layer (13) with at least two portions of content, wherein a first portion of content is a movie and
wherein a second portion of content is an advertisement;
wherein the disc further comprises at least one inhibit layer (31) overlying part of the storage layer (13) and leaving free another part of the storage layer (13), the inhibit layer (31) having changeable optical properties;
wherein the storage layer (13) comprises a table of content TOC area (22) with a TOC containing information identifying the location of the second portion of content;
and wherein the inhibit layer (31) is arranged to overby said TOC area (22);
wherein the optical disc is capable of being in a first state in which both portions of content are visible to an optical player, and wherein the optical disc is capable of making a transition to a second state in which the first portion of content is visible while the second portion of content is not visible;
wherein the inhibit layer (31) has the property of being transparent in the first state and
wherein the inhibit layer (31) is capable of making a transition from being transparent to being opaque such as to bring the optical disc to its second state;
wherein in the second state the inhibit layer (31) renders inaccessible the table of content TOC to the optical player, thereby rendering the second portion of content not visible to the optical player.

2. Optical disc according to claim 1, wherein the storage layer (13) comprises a third portion of content which is not visible in the first state and which is visible in the second state;
wherein said storage layer (13) comprises a second TOC area (24) with a TOC containing information identifying the location of the third portion of content.

3. Changing content optical disc (10), comprising at least one storage layer (13) with at least two portions of content,
wherein the first portion of content is a movie and wherein the second portion of content is an advertisement;
wherein the disc further comprises at least one inhibit layer (31) overlying part of the storage layer (13) and leaving free another part of the storage layer (13), the inhibit layer (31) having changeable optical properties:
wherein the storage layer (13) comprises a table of content TOC area (22) with a TOC containing information identifying the location of the second portion of content;
and wherein the inhibit layer (31) is arranged to overby said TOC area (22);
wherein the optical disc is capable of being in a first state in which the first portion of content is visible to an optical player while the second portion of content is not visible, and wherein the optical disc is capable of making a transition to a second state in which both portions of content are visible;
wherein the inhibit layer (31) has the property of being opaque in the first state and wherein
the inhibit layer (31) is capable of making a transition from being opaque to being transparent such as to bring the optical disc to its second state;
wherein in the second state the inhibit layer (31) renders accessible said table of content to the optical player thereby rendering the second portion of content visible to the optical player.

4. Optical disc according to claim 3, wherein the storage layer (13) comprises a third portion of content which is not visible in the first state and which is visible in the second state;
wherein the third portion of content is an advertisement;
wherein said storage layer (13) comprises a second TOC area (24) with a TOC containing information identifying the location of the third portion of content.

5. Optical disc according to any of claims 1-4, wherein the disc further comprises a timing control arrangement for controlling the timing of a change in the optical properties of the inhibit layer (31);
or wherein the inhibit layer (31) contains a dye sensitive to at least one component of atmospheric gas, or contains a dye sensitive to at least one component of ambient light, or contains an electrochromic layer controlled by a chip integrated in or attached to the disc.

6. Optical disc (10) according to any of the claims 1-5, the disc further having a surface (15) provided with a label (16) containing at least one advertisement image (43), wherein in a first state the advertisement image (43) is visible whereas in a second state the advertisement image (43) is not visible;
wherein the disc further comprises at least one inhibit layer (41) overlying said advertisement image (43), the inhibit layer (41) having the property of being capable of making a transition from transparent to opaque;
wherein the timing of the change in visibility of the label advertisement image (43) is substantially synchronized with the timing of the change in visibility of the second portion of content of the disc.

7. Optical disc according to claim 6, wherein the disc further comprises a timing control arrangement for controlling the timing of said transition of the inhibit layer (41);
or wherein the inhibit layer (41) contains a dye sensitive to at least one component of atmospheric gas, or contains a dye sensitive to at least one component of ambient light, or contains an electrochromic layer controlled by a chip integrated in or attached to the disc.

8. Optical disc according to claim 6, wherein the label (16) contains at least a second advertisement image (53), wherein in said first state the second advertisement image (53) is not visible wherein in said second state the second advertisement image (53) is visible;
and wherein the disc further comprises a second inhibit layer (51) overlying said second advertisement image (53), the second inhibit layer (51) having the property of being capable of making a transition from opaque to transparent.

9. Optical disc (10) according to any of the claims 1-5, the disc further having a surface (15) provided with a label (16) containing at least one advertisement image (43), wherein in a first state the advertisement image (43) is visible whereas in a second state the advertisement image (43) is not visible;
wherein the advertisement image is implemented as a reactive layer capable of changing its optical property.

10. Optical disc according to claim 9, wherein the advertisement image is implemented as a reactive layer having the property of being capable of making a transition from transparent to opaque so that the advertisement image is initially invisible and later changes to being visible.

11. Optical disc according to claim 9, wherein the advertisement image is implemented as a reactive layer having the property of being capable of making a transition from opaque to transparent so that the advertisement image is initially visible and later changes to being invisible.

12. Optical disc according to claim 6, wherein the inhibit layer (31) of the disc contains an electrochromic layer controlled by a chip integrated in or attached to the disc, and wherein the inhibit layer (41) of the label (16) contains an electrochromic layer controlled by the same chip.

13. Storage box (100) adapted to contain an optical disc implemented according to any of the claims 1-12, the box containing at least one advertisement image (143), wherein in a first state the advertisement image (143) is visible whereas in a second state the advertisement image (143) is not visible
and wherein the box further comprises at least one inhibit layer (141) overlying said advertisement image (143), the inhibit layer (141) having the property of being capable of making a transition from transparent to opaque;
wherein the timing of the change in visibility of the box advertisement image (143) is substantially synchronized with the timing of the change in visibility of the second portion of content of the disc.

14. Storage box according to claim 13, wherein the box further comprises a timing control arrangement for controlling the timing of said transition of the inhibit layer (141);
or wherein the inhibit layer (141) contains a dye sensitive to at least one component of atmospheric gas, or contains a dye sensitive to at least one component of ambient light, or contains an electrochromic layer controlled by a chip integrated in or attached to the box.

15. Storage box (100) adapted to contain an optical disc implemented according to any of the claims 1-12, the box containing at least one advertisement image (143), wherein in a first state the advertisement image (143) is visible whereas in a second state the advertisement image (143) is not visible;
wherein the box contains at least a second advertisement image (153), wherein in said first state the second advertisement image (153) is not visible wherein in said second state the second advertisement image (153) is visible;
and wherein the box further comprises a second inhibit layer (151) overlying said second advertisement image (153), the second inhibit layer (151) having the property of being capable of making a transition from opaque to transparent;
wherein the timing of the change in visibility of the box advertisement image (143) is substantially synchronized with the timing of the change in visibility of the second portion of content of the disc.

16. Storage box (100) adapted to contain an optical disc implemented according to any of the claims 1-12, the box containing at least one advertisement image (143), wherein in a first state the advertisement image (143) is visible whereas in a second state the advertisement image (143) is not visible;
and wherein the advertisement image is implemented as a reactive layer capable of changing its optical property
wherein the timing of the change in visibility of the box advertisement image (143) is substantially synchronized with the timing of the change in visibility of the second portion of content of the disc.

17. Storage box according to claim 16, wherein the advertisement image is implemented as a reactive layer having the property of being capable of making a transition from transparent to opaque so that the advertisement image is initially invisible and later changes to being visible.

18. Storage box according to claim 16, wherein the advertisement image is implemented as a reactive layer having the property of being capable of making a transition from opaque to transparent so that the advertisement image is initially visible and later changes to being invisible.

19. Storage box according to claim 13 or 15 or 16, wherein the advertisement image (143) is arranged in or on the box material;
or wherein the box material is transparent and the advertisement image (143) is arranged on an insert contained in the box.

## Patentansprüche

1. Optische Platte (10) mit wechselndem Inhalt, die mindestens eine Speicherschicht (13) mit mindestens zwei Inhaltsteilen umfasst, wobei es sich bei einem ersten Inhaltsteil um einen Film und bei einem zweiten Inhaltsteil um Werbung handelt;
wobei die Platte weiterhin mindestens eine Sperrschicht (31) umfasst, die sich über einem Teil der Speicherschicht (13) befindet und einen weiteren Teil der Speicherschicht (13) freilässt, wobei die Sperrschicht (31) veränderbare optische Eigenschaften aufweist;
wobei die Speicherschicht (13) einen TOC-(Inhaltsverzeichnis) Bereich (22) mit einem TOC umfasst, das die Positionierung des zweiten Inhaltsteils identifizierende Informationen enthält;
und wobei die Sperrschicht (31) so angeordnet ist, dass sie über dem TOC-Bereich (22) liegt;
wobei die optische Platte imstande ist, sich in einem ersten Zustand zu befinden, in dem beide Inhaltsteile für ein optisches Wiedergabegerät sichtbar sind, und wobei die optische Platte imstande ist, in einen zweiten Zustand überzugehen, in dem der erste Inhaltsteil sichtbar, der zweite Inhaltsteil dagegen nicht sichtbar ist;
wobei die Sperrschicht (31) die Eigenschaft besitzt, in dem ersten Zustand transparent zu sein, und wobei die Sperrschicht (31) imstande ist, einen Übergang von dem transparenten Zustand in einen opaken Zustand vorzunehmen, wie beispielsweise die optische Platte in ihren zweiten Zustand zu versetzen;
wobei in dem zweiten Zustand die Sperrschicht (31) das Inhaltsverzeichnis (TOC) für das optische Wiedergabegerät unzugänglich macht, wodurch der zweite Inhaltsteil für das optische Wiedergabegerät nicht sichtbar gemacht wird.

2. Optische Platte nach Anspruch 1, wobei die Speicherschicht (13) einen dritten Inhaltsteil umfasst, der in dem ersten Zustand nicht sichtbar und in dem zweiten Zustand sichtbar ist;
wobei die Speicherschicht (13) einen zweiten TOC-Bereich (24) mit einem TOC umfasst, das die Positionierung des dritten Inhaltsteils identifizierende Informationen enthält.

3. Optische Platte (10) mit wechselndem Inhalt, die mindestens eine Speicherschicht (13) mit mindestens zwei Inhaltsteilen umfasst,
wobei es sich bei dem ersten Inhaltsteil um einen Film und bei dem zweiten Inhaltsteil um Werbung handelt;
wobei die Platte weiterhin mindestens eine Sperrschicht (31) umfasst, die sich über einem Teil der Speicherschicht (13) befindet und einen weiteren Teil der Speicherschicht (13) freilässt, wobei die Sperrschicht (31) veränderbare optische Eigenschaften aufweist;
wobei die Speicherschicht (13) einen TOC-(Inhaltsverzeichnis) Bereich (22) mit einem TOC umfasst, das die Positionierung des zweiten Inhaltsteils identifizierende Informationen enthält;
und wobei die Sperrschicht (31) so angeordnet ist, dass sie über dem TOC-Bereich (22) liegt;
wobei die optische Platte imstande ist, sich in einem ersten Zustand zu befinden, in dem der erste Inhaltsteil für ein optisches Wiedergabegerät sichtbar, der zweite Inhaltsteil dagegen nicht sichtbar ist, und wobei die optische Platte imstande ist, einen Übergang in einen zweiten Zustand vorzunehmen, in dem beide Inhaltsteile sichtbar sind;
wobei die Sperrschicht (31) die Eigenschaft besitzt, in dem ersten Zustand opak zu sein, und wobei die Sperrschicht (31) imstande ist, einen Übergang von dem opaken Zustand in einen transparenten Zustand vorzunehmen, wie beispielsweise die optische Platte in ihren zweiten Zustand zu versetzen;
wobei in dem zweiten Zustand die Sperrschicht (31) das Inhaltsverzeichnis für das optische Wiedergabegerät zugänglich macht, wodurch der zweite Inhaltsteil für das optische Wiedergabegerät sichtbar gemacht wird.

4. Optische Platte nach Anspruch 3, wobei die Speicherschicht (13) einen dritten Inhaltsteil umfasst, der in dem ersten Zustand nicht sichtbar, in dem zweiten Zustand dagegen sichtbar ist;
wobei es sich bei dem dritten Inhaltsteil um Werbung handelt;
wobei die Speicherschicht (13) einen zweiten TOC-Bereich (24) mit einem TOC umfasst, das die Positionierung des dritten Inhaltsteils identifizierende Informationen enthält.

5. Optische Platte nach einem der Ansprüche 1-4, wobei die Platte weiterhin eine Zeitsteuerungsanordnung umfasst, um die Zeitabläufe einer Änderung der optischen Eigenschaften der Sperrschicht (31) zu steuern;
oder wobei die Sperrschicht (31) einen Farbstoff enthält, der gegen mindestens eine Komponente von atmosphärischem Gas empfindlich ist, oder einen Farbstoff enthält, der gegen mindestens eine Komponente von Umgebungslicht empfindlich ist, oder aber eine elektrochrome Schicht enthält, die von einem in die Platte integrierten oder an dieser angebrachten Chip gesteuert wird.

6. Optische Platte (10) nach einem der Ansprüche 1-5, wobei die Platte weiterhin eine Oberfläche (15) aufweist, die mit einem mindestens ein Werbebild (43) enthaltenden Label (16) versehen ist, wobei in einem ersten Zustand das Werbebild (43) sichtbar ist, während das Werbebild (43) in einem zweiten Zustand nicht sichtbar ist;
wobei die Platte weiterhin mindestens eine über dem Werbebild (43) liegende Sperrschicht (41) umfasst, wobei die Sperrschicht (41) die Eigenschaft besitzt, einen Übergang von transparent zu opak vornehmen zu können;
wobei die zeitliche Steuerung der Änderung der Sichtbarkeit des auf dem Label vorgesehenen Werbebildes (43) im Wesentlichen mit der zeitlichen Steuerung der Änderung der Sichtbarkeit des zweiten Inhaltsteils der Platte synchronisiert wird.

7. Optische Platte nach Anspruch 6, wobei die Platte weiterhin eine Zeitsteuerungsanordnung umfasst, um die zeitlichen Abläufe des Übergangs der Sperrschicht (41) zu steuern;
oder wobei die Sperrschicht (41) einen Farbstoff enthält, der gegen mindestens eine Komponente von atmosphärischem Gas empfindlich ist, oder einen Farbstoff enthält, der gegen mindestens eine Komponente von Umgebungslicht empfindlich ist, oder aber eine elektrochrome Schicht enthält, die von einem in die Platte integrierten oder an dieser angebrachten Chip gesteuert wird.

8. Optische Platte nach Anspruch 6, wobei das Label (16) zumindest ein zweites Werbebild (53) enthält, wobei in dem ersten Zustand das zweite Werbebild (53) nicht sichtbar ist, während in dem zweiten Zustand das zweite Werbebild (53) sichtbar ist;
und wobei die Platte weiterhin eine über dem zweiten Werbebild (53) liegende zweite Sperrschicht (51) umfasst, wobei die zweite Sperrschicht (51) die Eigenschaft besitzt, einen Übergang von opak zu transparent vornehmen zu können.

9. Optische Platte (10) nach einem der Ansprüche 1-5, wobei die Platte weiterhin eine Oberfläche (15) aufweist, die mit einem mindestens ein Werbebild (43) enthaltenden Label (16) versehen ist,
wobei in einem ersten Zustand das Werbebild (43) sichtbar ist, während das Werbebild (43) in einem zweiten Zustand nicht sichtbar ist;
wobei das Werbebild als eine reaktive Schicht, die imstande ist, ihre optische Eigenschaft zu verändern, implementiert wird.

10. Optische Platte nach Anspruch 9, wobei das Werbebild als eine reaktive Schicht mit der Eigenschaft, einen Übergang von transparent zu opak vornehmen zu können, implementiert wird, so dass das Werbebild anfänglich nicht sichtbar ist und später in einen Zustand übergegangen wird, in dem dieses sichtbar ist.

11. Optische Platte nach Anspruch 9, wobei das Werbebild als eine reaktive Schicht mit der Eigenschaft, einen Übergang von opak zu transparent vornehmen zu können, implementiert wird, so dass das Werbebild anfänglich sichtbar ist und später in einen Zustand übergegangen wird, in dem dieses nicht sichtbar ist.

12. Optische Platte nach Anspruch 6, wobei die Sperrschicht (31) der Platte eine elektrochrome Schicht enthält, die von einem in die Platte integrierten oder an dieser angebrachten Chip gesteuert wird, und wobei die Sperrschicht (41) des Labels eine von dem gleichen Chip gesteuerte, elektrochrome Schicht enthält.

13. Aufbewahrungsbehälter (100), der so ausgebildet ist, dass er eine nach einem der Ansprüche 1-12 implementierte, optische Platte enthält, wobei der Behälter mindestens ein Werbebild (143) enthält, wobei in einem ersten Zustand das Werbebild (143) sichtbar ist, während in einem zweiten Zustand das Werbebild (143) nicht sichtbar ist, und wobei der Behälter weiterhin mindestens eine über dem Werbebild (143) liegende Sperrschicht (141) umfasst, wobei die Sperrschicht (141) die Eigenschaft besitzt, einen Übergang von transparent zu opak vornehmen zu können;
wobei die zeitliche Steuerung der Änderung der Sichtbarkeit des auf dem Behälter vorgesehenen Werbebildes (143) im Wesentlichen mit der zeitlichen Steuerung der Änderung der Sichtbarkeit des zweiten Inhaltsteils der Platte synchronisiert wird.

14. Aufbewahrungsbehälter nach Anspruch 13, wobei der Behälter weiterhin eine Zeitsteuerungsanordnung umfasst, um die zeitlichen Abläufe des Übergangs der Sperrschicht (141) zu steuern;
oder wobei die Sperrschicht (141) einen Farbstoff enthält, der gegen mindestens eine Komponente von atmosphärischem Gas empfindlich ist, oder einen Farbstoff enthält, der gegen mindestens eine Komponente von Umgebungslicht empfindlich ist, oder aber eine elektrochrome Schicht enthält, die von einem in die Platte integrierten oder an dieser angebrachten Chip gesteuert wird.

15. Aufbewahrungsbehälter (100), der so ausgebildet ist, dass er eine nach einem der Ansprüche 1-12 implementierte, optische Platte enthält, wobei der Behälter mindestens ein Werbebild (143) enthält, wobei in einem ersten Zustand das Werbebild (143) sichtbar ist, während in einem zweiten Zustand das Werbebild (143) nicht sichtbar ist,
wobei der Behälter zumindest ein zweites Werbebild (153) enthält, wobei in dem ersten Zustand das zweite Werbebild (153) nicht sichtbar ist, während in dem zweiten Zustand das zweite Werbebild (153) sichtbar ist;
und wobei der Behälter weiterhin mindestens eine über dem zweiten Werbebild (153) liegende zweite Sperrschicht (151) umfasst, wobei die zweite Sperrschicht (151) die Eigenschaft besitzt, einen Übergang von opak zu transparent vornehmen zu können;
wobei die zeitliche Steuerung der Änderung der Sichtbarkeit des auf dem Behälter vorgesehenen Werbebildes (143) im Wesentlichen mit der zeitlichen Steuerung der Änderung der Sichtbarkeit des zweiten Inhaltsteils der Platte synchronisiert wird.

16. Aufbewahrungsbehälter (100), der so ausgebildet ist, dass er eine nach einem der Ansprüche 1-12 implementierte, optische Platte enthält, wobei der Behälter mindestens ein Werbebild (143) enthält, wobei in einem ersten Zustand das Werbebild (143) sichtbar ist, während in einem zweiten Zustand das Werbebild (143) nicht sichtbar ist;
und wobei das Werbebild als eine reaktive Schicht, die imstande ist, ihre optische Eigenschaft zu verändern, implementiert wird,
wobei die zeitliche Steuerung der Änderung der Sichtbarkeit des auf dem Behälter vorgesehenen Werbebildes (143) im Wesentlichen mit der zeitlichen Steuerung der Änderung der Sichtbarkeit des zweiten Inhaltsteils der Platte synchronisiert wird.

17. Aufbewahrungsbehälter nach Anspruch 16, wobei das Werbebild als eine reaktive Schicht mit der Eigenschaft, einen Übergang von transparent zu opak vornehmen zu können, implementiert wird, so dass das Werbebild anfänglich nicht sichtbar ist und später in einen Zustand übergegangen wird, in dem dieses sichtbar ist.

18. Aufbewahrungsbehälter nach Anspruch 16, wobei das Werbebild als eine reaktive Schicht mit der Eigenschaft, einen Übergang von opak zu transparent vornehmen zu können, implementiert wird, so dass das Werbebild anfänglich sichtbar ist und später in einen Zustand übergegangen wird, in dem dieses nicht sichtbar ist.

19. Aufbewahrungsbehälter nach Anspruch 13, 15 oder 16, wobei das Werbebild (143) in oder auf dem Behältermaterial vorgesehen ist;
oder wobei das Behältermaterial transparent und das Werbebild (143) auf einem in dem Behälter enthaltenen Einsatz angeordnet ist.

## Revendications

1. Disque optique à contenu changeant (10), comprenant au moins une couche de stockage (13) avec au moins deux parties de contenu, dans lequel une première partie de contenu est un film et dans lequel une seconde partie de contenu est une publicité ;
dans lequel le disque comprend également au moins une couche d'inhibition (31) recouvrant une partie de la couche de stockage (13) et laissant libre une autre partie de la couche de stockage (13), la couche d'inhibition (31) ayant des propriétés optiques modifiables ;
dans lequel la couche de stockage (13) comprend une surface de table des matières TOC (22) avec une TOC contenant des informations identifiant l'emplacement de la seconde partie de contenu ;
et dans lequel la couche d'inhibition (31) est agencée pour recouvrir ladite surface de TOC (22) ;
dans lequel le disque optique peut être dans un premier état dans lequel les deux parties de contenu sont visibles pour un lecteur optique, et dans lequel le disque optique peut effectuer une transition dans un second état dans lequel la première partie de contenu est visible alors que la seconde partie de contenu n'est pas visible ;
dans lequel la couche d'inhibition (31) présente la propriété de transparence dans le premier état et dans lequel la couche d'inhibition (31) peut effectuer une transition de l'état transparent à l'état opaque, de façon à amener le disque optique dans son second état ;
dans lequel dans le second état la couche d'inhibition (31) rend inaccessible la table des matières TOC pour le lecteur optique, rendant ainsi la seconde partie du contenu invisible pour le lecteur optique.

2. Disque optique selon la revendication 1, dans lequel la couche de stockage (13) comprend une troisième partie de contenu qui n'est pas visible dans le premier état et qui est visible dans le second état ;
dans lequel ladite couche de stockage (13) comprend une seconde surface de TOC (24) avec une TOC contenant des informations identifiant l'emplacement de la troisième partie de contenu.

3. Disque optique à contenu changeant (10), comprenant au moins une couche de stockage (13) avec au moins deux parties de contenu,
dans lequel la première partie de contenu est un film et dans lequel la seconde partie de contenu est une publicité ;
dans lequel le disque comprend également au moins une couche d'inhibition (31) recouvrant une partie de la couche de stockage (13) et laissant libre une autre partie de la couche de stockage (13), la couche d'inhibition (31) ayant des propriétés optiques modifiables ;
dans lequel la couche de stockage (13) comprend une surface de table des matières TOC (22) avec une TOC contenant des informations identifiant l'emplacement de la seconde partie de contenu ;
et dans lequel la couche d'inhibition (31) est agencée pour recouvrir ladite surface de TOC (22) ;
dans lequel le disque optique peut être dans un premier état dans lequel la première partie de contenu est visible pour un lecteur optique alors que la seconde partie de contenu n'est pas visible, et dans lequel le disque optique peut effectuer une transition dans un second état dans lequel les deux parties de contenu sont visibles ;
dans lequel la couche d'inhibition (31) présente la propriété d'opacité dans le premier état et dans lequel la couche d'inhibition (31) peut effectuer une transition de l'état opaque à l'état transparent de façon à amener le disque optique dans son second état ;
dans lequel dans le second état la couche d'inhibition (31) rend accessible ladite table des matières pour le lecteur optique, rendant ainsi la seconde partie du contenu visible pour le lecteur optique.

4. Disque optique selon la revendication 3, dans lequel la couche de stockage (13) comprend une troisième partie de contenu qui n'est pas visible dans le premier état et qui est visible dans le second état ;
dans lequel la troisième partie de contenu est une publicité ;
dans lequel ladite couche de stockage (13) comprend une seconde surface de TOC (24) avec une TOC contenant des informations identifiant l'emplacement de la troisième partie de contenu.

5. Disque optique selon l'une quelconque des revendications 1 à 4, dans lequel le disque comprend également un dispositif de contrôle de temporisation pour contrôler la temporisation d'une modification dans les propriétés optiques de la couche d'inhibition (31) ; ou
dans lequel la couche d'inhibition (31) contient une teinte sensible à au moins un composant de gaz atmosphérique, ou contient une teinte sensible à au moins un composant de lumière ambiante, ou contient une couche électrochromique contrôlée par une puce intégrée dans le disque ou fixée à celui-ci.

6. Disque optique (10) selon l'une quelconque des revendications 1 à 5, le disque comprenant également une surface (15) dotée d'une étiquette (16) contenant au moins une image publicitaire (43), dans lequel dans un premier état l'image publicitaire (43) est visible, alors que dans un second état, l'image publicitaire (43) n'est pas visible ;
dans lequel le disque comprend également au moins une couche d'inhibition (41) recouvrant ladite image publicitaire (43), la couche d'inhibition (41) présentant la propriété de pouvoir effectuer une transition de l'état transparent à l'état opaque ;
dans lequel la temporisation de la modification de visibilité de l'image publicitaire sur l'étiquette (43) est sensiblement synchronisée avec la temporisation de la modification de la visibilité de la seconde partie de contenu du disque.

7. Disque optique selon la revendication 6, dans lequel le disque comprend également un dispositif de contrôle de temporisation pour contrôler la temporisation de ladite transition de la couche d'inhibition (41) ; ou
dans lequel la couche d'inhibition (41) contient une teinte sensible à au moins un composant de gaz atmosphérique, ou contient une teinte sensible à au moins un composant de lumière ambiante, ou contient une couche électrochromique contrôlée par une puce intégrée au disque ou fixée à celui-ci.

8. Disque optique selon la revendication 6, dans lequel l'étiquette (16) contient au moins une seconde image publicitaire (53), dans lequel dans ledit premier état, la seconde image publicitaire (53) n'est pas visible, et dans lequel dans ledit second état, la seconde image publicitaire (53) est visible ; et
dans lequel le disque comprend également une seconde couche d'inhibition (51) recouvrant ladite seconde image publicitaire (53), la seconde couche d'inhibition (51) présentant la propriété de pouvoir effectuer une transition de l'état opaque à l'état transparent.

9. Disque optique (10) selon l'une quelconque des revendications 1 à 5, le disque comprenant également une surface (15) dotée d'une étiquette (16) contenant au moins une image publicitaire (43),
dans lequel dans un premier état, l'image publicitaire (43) est visible alors que dans un second état, l'image publicitaire (43) n'est pas visible ;
dans lequel l'image publicitaire est mise en oeuvre comme une layer réactive capable de modifier ses propriétés optiques.

10. Disque optique selon la revendication 9, dans lequel l'image publicitaire est mise en oeuvre comme une couche réactive présentant la propriété de pouvoir effectuer une transition de l'état transparent à l'état opaque de telle sorte que l'image publicitaire soit initialement invisible et change ensuite pour être visible.

11. Disque optique selon la revendication 9, dans lequel l'image publicitaire est mise en oeuvre comme une couche réactive présentant la propriété de pouvoir effectuer une transition de l'état opaque à l'état transparent de telle sorte que l'image publicitaire soit initialement visible et change ensuite pour être invisible.

12. Disque optique selon la revendication 6, dans lequel la couche d'inhibition (31) du disque contient une couche électrochromique contrôlée par une puce intégrée au disque ou fixée à celui-ci, et dans lequel la couche d'inhibition (41) de l'étiquette (16) contient une couche électrochromique contrôlée par la même puce.

13. Boîtier de stockage (100) adapté pour contenir un disque optique mis en oeuvre selon l'une quelconque des revendications 1 à 12, le boîtier contenant au moins une image publicitaire (143), dans lequel dans un premier état l'image publicitaire (143) est visible alors que dans un second état l'image publicitaire (143) n'est pas visible ; et
dans lequel le boîtier comprend également au moins une couche d'inhibition (141) recouvrant ladite image publicitaire (143), la couche d'inhibition (141) présentant la propriété de pouvoir effectuer une transition de l'état transparent à l'état opaque ;
dans lequel la temporisation de la modification de visibilité de l'image publicitaire (143) sur le boîtier est sensiblement synchronisée avec la temporisation de la modification de visibilité de la seconde partie de contenu du disque.

14. Boîtier de stockage selon la revendication 13, dans lequel le boîtier comprend également un dispositif de contrôle de temporisation pour contrôler la temporisation de ladite transition de la couche d'inhibition (141) ; ou
dans lequel la couche d'inhibition (141) contient une teinte sensible à au moins un composant de gaz atmosphérique, ou contient une teinte sensible à au moins un composant de lumière ambiante, ou contient une couche électrochromique contrôlée par une puce intégrée au boîtier ou fixée à celui-ci.

15. Boîtier de stockage (100) adapté pour contenir un disque optique mis en oeuvre selon l'une quelconque des revendications 1 à 12, le boîtier contenant au moins une image publicitaire (143), dans lequel dans un premier état l'image publicitaire (143) est visible alors que dans un second état l'image publicitaire (143) n'est pas visible ;
dans lequel le boîtier contient au moins une seconde image publicitaire (153), dans lequel dans ledit premier état, la seconde image publicitaire (153) n'est pas visible, et dans lequel dans ledit second état, la seconde image publicitaire (153) est visible ; et
dans lequel le boîtier comprend également une seconde couche d'inhibition (151) recouvrant ladite seconde image publicitaire (153), la seconde couche d'inhibition (151) présentant la propriété de pouvoir effectuer une transition de l'état opaque à l'état transparent ;
dans lequel la temporisation de la modification de visibilité de l'image publicitaire (143) sur le boîtier est sensiblement synchronisée avec la temporisation de la modification de visibilité de la seconde partie de contenu du disque.

16. Boîtier de stockage (100) adapté pour contenir un disque optique mis en oeuvre selon l'une quelconque des revendications 1 à 12, le boîtier contenant au moins une image publicitaire (143), dans lequel dans un premier état l'image publicitaire (143) est visible alors que dans un second état l'image publicitaire (143) n'est pas visible ; et
dans lequel l'image publicitaire est mise en oeuvre comme une couche réactive capable de modifier ses propriétés optiques,
dans lequel la temporisation de la modification de visibilité de l'image publicitaire (143) sur le boîtier est sensiblement synchronisée avec la temporisation de la modification de visibilité de la seconde partie de contenu du disque.

17. Boîtier de stockage selon la revendication 16, dans lequel l'image publicitaire est mise en oeuvre comme une couche réactive présentant la propriété de pouvoir effectuer une transition de l'état transparent à l'état opaque, de telle sorte que l'image publicitaire soit initialement invisible et change ensuite pour être visible.

18. Boîtier de stockage selon la revendication 16, dans lequel l'image publicitaire est mise en oeuvre comme une couche réactive présentant la propriété de pouvoir effectuer une transition de l'état opaque à l'état transparent, de telle sorte que l'image publicitaire soit initialement visible et change ensuite pour être invisible.

19. Boîtier de stockage selon la revendication 13 ou 15 ou 16, dans lequel l'image publicitaire (143) est agencée dans ou sur la matière du boîtier ; ou
dans lequel la matière du boîtier est transparente, et l'image publicitaire (143) est agencée sur un insert contenu dans le boîtier.
